# EUROPEAN PATENT SPECIFICATION

(11) **EP 3 210 306 B1**
(45) Date of publication and mention of the grant of the patent: **26.12.2018**
(21) Application number: 14803248.5
(22) Date of filing: 21.10.2014
(51) Int. Cl.: H04B 1/525

(54) **RADIO FREQUENCY MULTIPLEXER**
FUNKFREQUENZ-MULTIPLEXER
MULTIPLEXEUR DE RADIOFRÉQUENCE

(43) Date of publication of application: 30.08.2017
(73) Proprietor: Telefonaktiebolaget LM Ericsson (publ), 164 83 Stockholm (SE)
(72) Inventor: JIAN, Chunyun, Ottawa, Ontario K2M 2M4 (CA); SYCHALEUN, Somsack, Ottawa, Ontario K2M 2X2 (CA); LIU, Wei, Ottawa, Ontario K2T 0E7 (CA)
(74) Representative: Ericsson
(86) International application number: PCT/IB2014/065517
(87) International publication number: WO 2016/063108

(56) References cited:
- EP-A2- 0 724 337
- EP-A2- 2 073 393
- WO-A1-2008/103086
- CN-A- 102 231 638
- US-A1- 2005 070 232
- US-B1- 6 710 650

## Description

### FIELD

The present disclosure relates to radio transceivers and more particularly, to multiplexing transmit and receive signals, and filtering receive signals.

### BACKGROUND

Antennas for radio base stations are physically large compared to other radio components, but typically have relatively wider bandwidth. Therefore, it is preferable to have multiple transmit (TX) bands and receive (RX) bands share an antenna so that the number of antennas can be minimized.

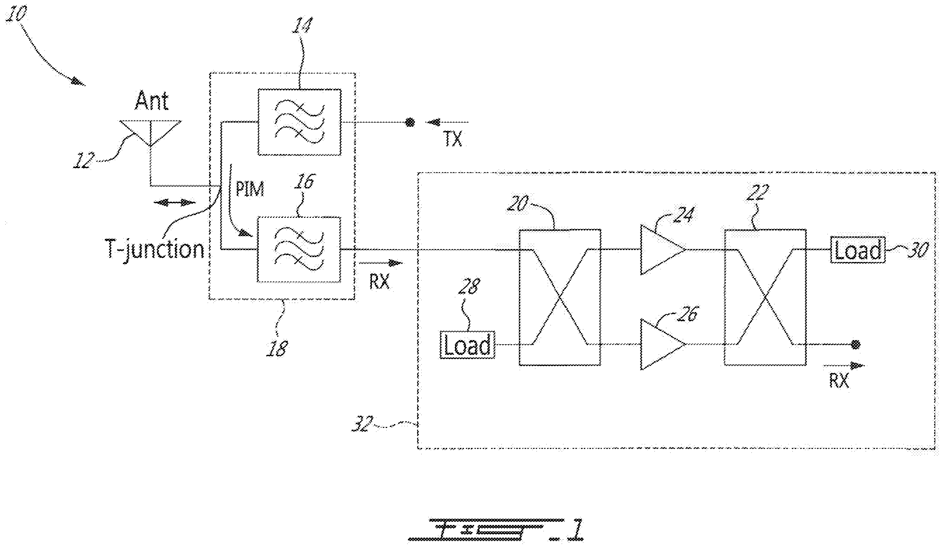

In order to share an antenna, a multiplexer (or a duplexer for single-band transmit and receive applications) is typically used. Figure 1 shows a conventional 2-band duplexer 18 in a Radio Frequency (RF) front end 10 that couples a transmit signal and a receive signal to an antenna 12. The transmit and receive signals pass through a respective filter 14, 16. For high-power base stations, air cavity filters having low passive intermodulation (PIM) may be employed to implement the duplexer 18. However, for low-power base stations transmitting and receiving in small cells, these air cavity filters may be too large and miniature filters are preferred. Such miniature filters are typically acoustic filters such as surface acoustic wave (SAW), bulk acoustic wave (BAW) and thin-film bulk acoustic resonator (FBAR) filters, or are ceramic filters. However, these types of filters have limited PIM performance, even at low power. Thus, as shown in FIG. 1, the transmitter filter 14 undesirably ends up feeding PIM to the receive circuit via the receive filter 16, thereby reducing receiver sensitivity.

Typically, the receive signal at the output of the duplexer 18 is fed into a Low-Noise Amplifier (LNA) that amplifies the signal prior to demodulation and processing in the baseband. Various amplifying configurations can be used to amplify a receive signal including for example, single-ended (or unit) amplifiers and balanced LNAs which are particularly well-suited for high-frequency applications. An example of a balanced LNA is shown in Figure 1 at 32. The balanced LNA 32 includes two unit amplifiers 24, 26, and two 3-dB quadrature hybrid couplers 20, 22, each terminated with a fixed load (e.g. 50 Ω) 28, 30. The receive signal output from the duplexer 18 is split into quadrature signals by the first coupler 20 and fed into the two unit amplifiers 24, 26. The coupler 22 at the output combines the outputs of the two unit amplifiers 24, 26 to produce an amplified receive signal that can then be fed into a receive circuit for further demodulation and baseband processing.

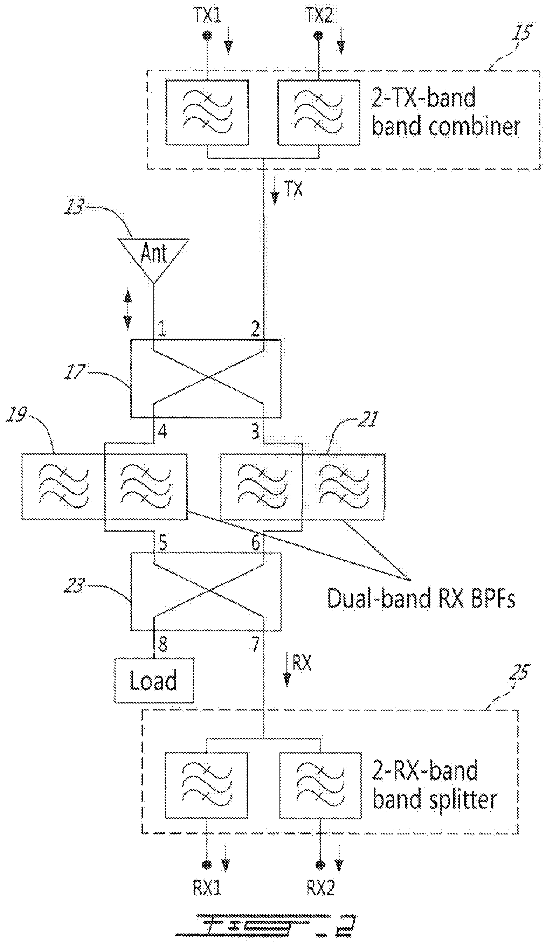

Figure 2 (see WO 2016/012837) shows a type of 4-band multiplexer that exhibits low PIM. In the 4-band multiplexer of Figure 2, two transmit signals, TX1 and TX2, are combined by a 2-TX band, band combiner 15 and input to port 2 of a first 3dB 90 degree hybrid coupler 17. The combined TX signal travels via two different paths through the first hybrid coupler 17. A first path is from port 2 to port 4 (the direct port), and a second path is from port 2 to port 3 (the coupled port). The signal from port 4 passes through a dual band RX band pass filter 19 and is input to port 5 of a second upper 3dB 90 degree hybrid coupler 23. The signal from port 3 passes through a second dual band RX band pass filter 21 and is input to port 6 of the second hybrid coupler 23. The signal arriving at port 5 from the RX band pass filter 19 travels via two different paths through the second hybrid coupler 23. The first path is from port 5 to port 7 to a 2-RX band, band splitter 25. The second path is from port 5 to port 8 connected a load (e.g. 50Ω). Similarly, the signal arriving at port 6 of the second hybrid coupler 23 travels via two paths. The first path is from port 6 to port 8 (into a load) and the second path is from port 6 to port 7. The signals from port 7 are passed through the 2-RX band splitter 25 and split into receive signals RX1 and RX2.

In the multiplexer example of Figure 2, the couplers 17 and 23 and BPFs 19 and 21 enable the use of a single antenna (e.g. antenna 13) to both transmit signals TX1 and TX2 and receive signals RX1 and RX2. Ideally, the RX BPFs 19, 21 are identical and have a frequency response configured to pass the RX1 and RX2 signals received at the antenna 13 and to reject the TX1 and TX2 signals that are input at port 2 of of coupler 17 from the 2-TX band combiner 15. In practice the TX1 and TX2 signals are not entirely rejected and there is a certain residual amount (also referred to as TX leakage) that eventually passes through the BPFs 19, 21. Also, if there was any PIM generated by the TX1 and TX2 signals in the band combiner 15 and in the pass bands of the BPFs 19 and 21 would pass through the BPFs 19 and 21 as well. However, because of its coupler arrangement, the multiplexer example shown in Figure 2 exhibits relatively high isolation between the TX input port, port 2 and the RX output port, port 7 as well as low PIM at the RX output port. Specifically, in the first hybrid coupler 17, the TX signal travelling from port 2 to port 4, i.e., the direct port, has a 90 degree phase difference with the signal travelling from port 2 to port 3, i.e., the coupled port. Similarly, in the second hybrid coupler 23, for the signal at port 5, the output at the direct port 7 has a 90 degree phase difference with the output at the coupled port 8 and for the signal at port 6, the output at the direct port 8 has a 90 degree phase difference with the output at the coupled port 7. Thus, any residual and PIM caused by the TX signal from port 2 in the first coupler 17 to port 4 that couples through the RX BPF 19 to port 5 to 7 in the second coupler 23 will ideally be 180 degrees out of phase with the TX residual and PIM from port 2 to 3 of the first coupler 17 to the RX BPF 21 to port 6 to 7 of the second coupler 23. Thus, the signals of these two paths will cancel each other at port 7, the RX output port. Conversely, the receive signal from antenna 13 at port 1 travelling through the first and second couplers 17, 23 and RX BPF 19, 21 that reach port 7 of the second coupler 23 will add constructively since they are in phase.

Also, the TX signal received at port 2 of the first coupler 17 is split in two signals, one traversing from port 2 to 4 (the direct port) and one traversing from port 2 to port 3 (the direct port). The signal arriving at port 4 will be reflected due to the transmit band rejection of the RX BPF 19. The reflected signal will be reflected back to port 1 and will also be reflected to port 2. Similarly, the signal arriving at port 3 will be reflected due to the transmit band rejection of the RX BPF 21. This reflected signal will be reflected back to port 1 and will also be reflected to port 2. The signal that traverses from port 2 to port 4 to port 1 will add constructively at port 1 with the signal that traverses from port 2 to port 3 to port 1. Conversely, the two signals reflected back to port 2 will destructively interfere and cancel.

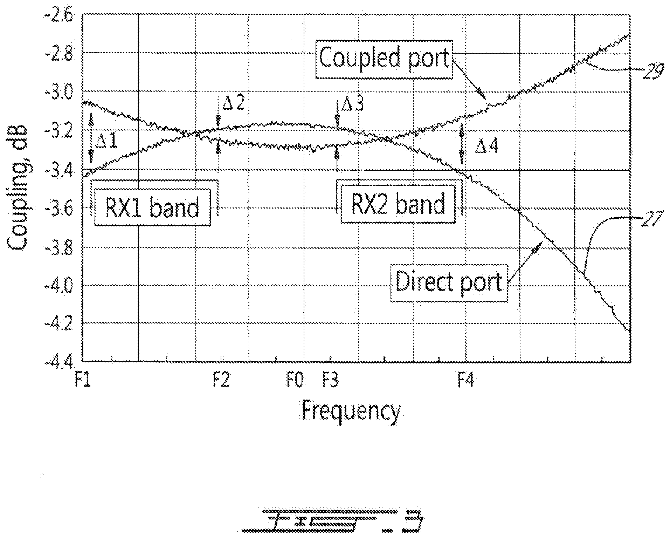

The above discussion assumes that the hybrid couplers provide a 90 degree phase shift and equal splitting of the signal power over the entire relevant frequency band. Further, the above discussion assumes a flat amplitude frequency response that is the same for the path to direct port and a path to a coupled port. In reality, the hybrid couplers (e.g. the couplers 17, 23 of Figure 2) may have a frequency response as shown in FIG. 3. As shown in Figure 3 the frequency response 27 of the coupler direct port is concave down, whereas the frequency response 29 of the coupler coupled port is concave up. At the lower frequency of the lower receive band RX1, the power difference between the direct port and the coupled port is about 0.35 dB. Thus, taking frequency F1 as an example, if the first and second hybrid couplers 17, 23 have the response shown in FIG. 3, the signal that traverses from port 2 to 4 to 5 to 7 at frequency F1 would have a power about 0.7 dB lower than the power of the signal that traverses from port 2 to 3 to 6 to 7. This means the cancellation at frequency FI would be about 10dB worse than what it would be if there was no power difference at that frequency between the direct and coupled ports. In this example, the power difference also results in higher PIM at frequency F1 (by about 10 dB) getting into the receive path at port 7. At the same time, this also results in additional insertion loss in the receive path from port 1 to port 7 for the receive signal RX near frequency F1 of about 0.1 to 0.3dB. Further, since a dual band BPF has a higher insertion loss than a single band BPF, the multiplexer configuration of Figure 2 has a high insertion loss

Document EP0724337 discloses a mast head amplifier comprising an arrangement having an hybrid coupler, a first port of which receives the transmit signals and a second port of which receives the receive signals; and frequency selective means connected to other ports of said hybrid and operable to pass therethrough signals received from the hybrid having a frequency in the said second band and to reflect signals received from the hybrid that have a frequency in the said first band.

### SUMMARY

The present invention is defined by the features of the appended claims.

The present disclosure advantageously provides a multiplexing method and system for routing transmit and receive signals in a radio RF front end to separate and amplify received signals from transmit signals in different frequency bands. In some examples, the multiplexing method and system of the present disclosure provides enhanced PIM performance in combination with balanced amplification of the received signals.

According to one aspect, the present disclosure provides a Radio Frequency (RF) multiplexer for routing transmit signals to an antenna and routing receive signals to a receiver. The multiplexer includes a first hybrid coupler providing four ports where a first port configured to connect to an antenna and a second port being an input port is configured to receive an N-band transmit signal. The multiplexer further includes a first M-band splitter connected to a third port of the first hybrid coupler and produces a first set of M outputs. The multiplexer further includes a first set of M amplifying circuits, each having an input port connected to one of the first set of M outputs and configured to produce an amplified output via an output port. The multiplexer further includes a second M-band splitter connected to a fourth port of the first hybrid coupler and produces a second set of M outputs. The multiplexer further includes a second set of M amplifying circuits, each having an input port connected to one of the second set of M outputs and configured to produce an amplified output via an output port. The multiplexer further includes at least one other hybrid coupler providing four ports, a first port being connected to receive the amplified output of one of the first set of amplifying circuits, and a second port being connected to the amplified output of one of the second set of amplifying circuits, each of the at least one other hybrid coupler having a third port being an output port and configured to output one of M receive signals for one of M receive circuits and a fourth port configured to connect to one of M loads.

According to this aspect, in some embodiments, each of the first and the plurality of hybrid couplers is a 3dB 90 degree hybrid coupler. In some embodiments, M and N are each a positive integer equal to or greater than one and the at least one other hybrid coupler is a set of M hybrid couplers. In some other embodiments, each of the at least one other hybrid coupler has a frequency response that complements a frequency response of the first hybrid coupler in a respective band so that a combined frequency response of the first hybrid coupler and one of the at least one other hybrid coupler causes cancellation of two signals arriving at an output port of the one of the at least one other hybrid coupler from two different paths through the hybrid couplers. In some other embodiments, the first and second M-band splitters each have M filters and each filter of the first M-band splitter has a frequency response that corresponds to a frequency response of a corresponding filter of the second M-band splitter.

In some other embodiments, each one of the first and second set of M amplifying circuits includes at least one amplifier, and each of the at least one amplifier of the first set of M amplifying circuits has a frequency response in a respective band that corresponds to a frequency response of a corresponding amplifier of the second set of M amplifying circuits in the respective band. In some other embodiments, each of the first and second set of M amplifying circuits includes a Low Noise Amplifier (LNA). In some other embodiments, each one of the first and second set of amplifying circuits includes at least one cascade of an amplifier followed in series by at least one ceramic multilayer filter module. Also, in some other embodiments, each filter of the first M-band splitter and each filter of the second M-band splitter includes an acoustic filter. In some other embodiments, the acoustic filter is one of a Surface Acoustic Wave (SAW) filter, a Bulk Acoustic Wave (BAW) filter and a Thin-Film Bulk Acoustic resonator (FBAR) filter. In some other embodiments, an out-of-band frequency attenuation characteristic of the at least one ceramic multilayer filter module exceeds an out-of-band frequency attenuation characteristic of each of a corresponding two of the 2M acoustic filters. In some other embodiments, a pass band amplitude characteristic of the at least one ceramic multilayer filter module varies less than a pass band amplitude characteristic of a corresponding one of the 2M acoustic filters.

In some other embodiments, the first M-band splitter comprises M band pass filters, each band pass filter of the first M-band splitter passing a different one of the M receive signals and rejecting the N-band transmit signal. In some other embodiments the second M-band splitter comprises M band pass filters, each band pass filter of the second M-band splitter corresponding to a band pass filter of the first M-band splitter. Yet in some further embodiments, the multiplexer further includes an N-band combiner having an output port connected to the second port of the first hybrid coupler, the N-band combiner configured to receive N transmit signals via N input ports and to produce via its output port the N-band transmit signal.

### BRIEF DESCRIPTION OF THE DRAWINGS

A more complete understanding of the present disclosure, and the attendant advantages and features thereof, will be more readily understood by reference to the following detailed description when considered in conjunction with the accompanying drawings wherein:
Figure 1 is a block diagram of a conventional Radio-Frequency front end;
Figure 2 is a block diagram of a conventional four band multiplexer;
Figure 3 is a graph of a frequency response of the hybrid couplers of Figure 2;
Figure 4 is a block diagram of one embodiment of a two band multiplexer constructed in accordance with principles of the present disclosure;
Figure 5 is a block diagram of another embodiment of a two band multiplexer constructed in accordance with principles of the present disclosure;
Figure 6 is a block diagram of one embodiment of a four band multiplexer constructed in accordance with principles of the present disclosure;
Figure 7 is a graph of a frequency response of a first hybrid coupler of the configuration of Figure 6 showing receive band 1;
Figure 8 is a graph of a coupling response of a second hybrid coupler of the configuration of Figure 6 showing a complementary response for receive band 1;
Figure 9 is graph of the frequency response of the first hybrid coupler of the configuration of Figure 6 showing receive band 2;
Figure 10 is a graph of the frequency response of a third hybrid coupler of the configuration of Figure 6, showing a complementary response for receive band 2;
Figure 11 is a block diagram of one embodiment of a multiband multiplexer constructed in accordance with principles of the present disclosure;
Figure 12 is a frequency response of the receive filter combination of Figures 5 and 11;
Figure 13 is a block diagram of another embodiment for the amplifying circuit constructed in accordance with principles of the present disclosure; and
Figure 14 is block diagram of yet another embodiment for the amplifying circuit constructed in accordance with principles of the present disclosure.

### DETAILED DESCRIPTION

Before describing in detail exemplary embodiments that are in accordance with the present disclosure, it is noted that the embodiments reside primarily in combinations of apparatus components and processing steps related multiplexing transmit and receive signals and filtering receive signals in a radio. Accordingly, the system and method components have been represented where appropriate by conventional symbols in the drawings, showing only those specific details that are pertinent to understanding the embodiments of the present disclosure so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements.

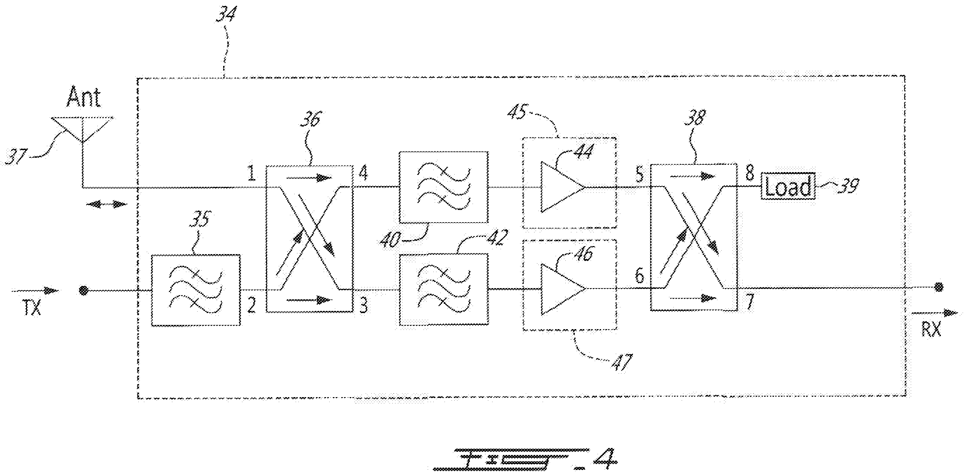

Referring now to the drawing figures, where like reference designators refer to like elements, Figure 4 shows a two band multiplexer (also called a duplexer in this case) 34 for a Radio-Frequency (RF) front end constructed in accordance with principles of the present disclosure to separate and amplify a received signal RX from a transmit signal TX in different frequency bands. As shown, the multiplexer 34 includes in combination a first and second hybrid coupler 36, 38 (e.g 3dB 90 degree couplers), a first and second receive (RX) Band-Pass Filter (BPF) 40, 42, and a first and second amplifying circuit 45, 47. A transmit (TX) BPF 35 is configured to receive the transmit signal TX and output a filtered signal to port 2 of the first hybrid coupler 36. The TX signal is reflected at BPFs 40, 42 via ports 3 and 4 and added in phase at port 1 and coupled to the antenna 37. In the example of Figure 4, the multiplexer 34 is a stand-alone or integrated module that incorporates the TX BPF 35. However, other implementations are possible. For example, the TX BPF 35 could be an external component combined to the multiplexer module during the design phase of the RF front end. Alternatively, the multiplexer 34 could be built with discrete (stand-alone) components to provide greater design flexibility in the choice of filters for the TX and RX paths. For example, a high power ceramic filter with a relatively large size can be selected as TX BPF 35 while the receive path filters (e.g. RX BPFs 40, 42) can be selected to be low power, small-sized acoustic filters. Other implementations are possible.

In the example of Figure 4, a receive signal RX is received by the antenna 37 and input to port 1 of the first hybrid coupler 36. This signal is split to port 3 (direct port) and to port 4 (coupled port). The signal at port 4 is coupled to port 5 of the second hybrid coupler 38 via BPF 40 and amplifying circuit 45 cascaded in series. Similarly, the signal at port 3 is coupled to port 6 of the second hybrid coupler 38 via BPF 42 and amplifying circuit 47 also cascaded in series. In this example, the first and second amplifying circuits 45, 47 each include a Low Noise Amplifier (LNA) 44, 46 with preferably an identical or similar frequency response. However, other amplifying circuit configurations exist (as will be described below in further detail). In addition, the BPFs 40, 42 also preferably configured with an identical or similar frequency response operate to pass a frequency band corresponding to the receive signal RX but in addition, the BPFs 40, 42 are configured to reject the TX signal coupled via ports 3, 4 of the first hybrid coupler 36. However, other possibilities exist where, for multiband applications for example, band splitters could be used instead of band-pass filters, as will be explained below in other examples. In some embodiments, the BPFs 40, 42 may be acoustic filters such as for example, SAW, BAW or FBAR filters which are substantially smaller in size compared to ceramic filters. However, other types of filters and/or other filtering implementations are possible.

Continuing with the example of Figure 4, the signal received at ports 5 and 6 is coupled to output port 7 of the second hybrid coupler 38. The output of the second hybrid coupler 38 denoted as receive signal RX is fed into a receive circuit (not shown) for further processing and demodulation. According to the principles of the present disclosure, the multiplexer 34 incorporates the amplifying circuits 45, 47 directly in the receive path between the couplers 36, 38 to provide balanced amplification. As a result, at port 1 (the input) of the first hybrid coupler 36, reflected signals from the two unit amplifiers 44, 46 are 180 out of phase and cancel each other out. For the same reason, at port 7 (the output) of the second hybrid coupler 38, reflected signals will also be cancelled resulting in good input and output Return-Loss (RL) behavior for the (balanced) LNA configuration provided by the unit amplifiers 44, 46. This LNA configuration also provides better stability compared to single-ended amplifiers.

In addition to providing good (balanced) amplification, the multiplexer arrangement of Figure 4 also exhibits relatively low PIM. Specifically, in the first hybrid coupler 36, the TX signal travelling from port 2 to port 4, i.e., the direct port, has a 90 degree phase difference with the signal travelling from port 2 to port 3, i.e., the coupled port. Similarly, in the second hybrid coupler 38, for the signal at port 5, the output at the direct port 7 has a 90 degree phase difference with the signal at the coupled port 8 and for the signal at port 6, the output at the direct port 8 has a 90 degree phase difference with the signal at the coupled port7. Thus, the residual TX signal that couples through the RX BPF 40 via port 4 in the first coupler 36 to port 5 to 7 in the second coupler 38 will ideally be 180 degrees out of phase with the residual TX signal from port 2 to 3 in the first coupler 36 to the RX BPF 42 to port 6 to 7 of the second coupler 38. Thus, the signals of these two paths will cancel each other. Conversely, the receive signals from antenna 37 at port 1 travelling through the first and second couplers 36, 38 and RX BPF 40, 42 that reach port 7 of the second coupler 38 will add constructively since they are in phase.

Compared to single-ended amplifier configurations, other benefits associated with a balanced amplification configuration such as shown in Figure 4 include better power handling, better input/output matching capability with a lower Return Loss (RL) and better stability. Compared to conventional front end designs that use a conventional multiplexer in series with a balanced LNA (ie the balanced LNA being in a receive circuit connected to receive the RX signal), the multiplexer configuration of the present disclosure also advantageously uses a reduced number of components (e.g. a reduced number of couplers) resulting in a design with a lower Noise Figure (NF), that is less expensive and smaller, which, for some applications (e.g. low-power basestations and/or multiband operation) can be a substantial benefit.

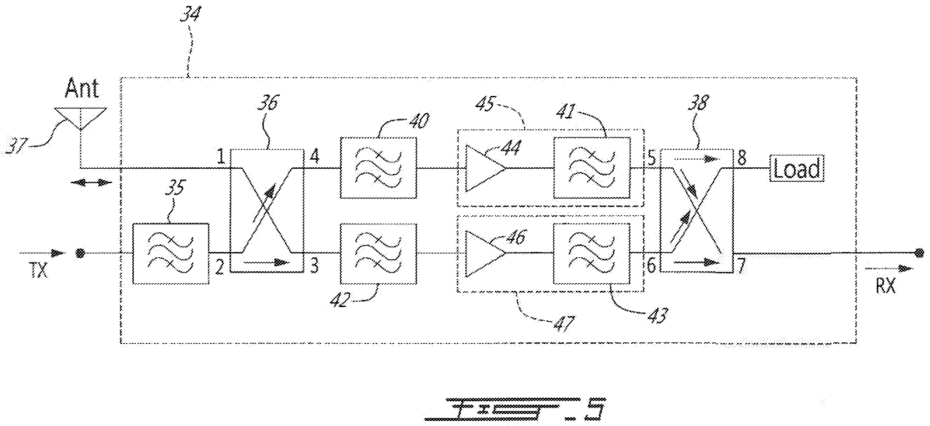

To reduce the NF further and/or improve the out-of-band attenuation, additional filters can be used in the receive paths. For example, Figure 5 shows the embodiment of Figure 4 augmented with an additional BPF in each receive path to improve the multiplexer RX path performance. Specifically, in addition to the TX BPF 35, hybrid couplers 36, 38, and RX BPFs 40, 42, the multiplexer 34 also includes an additional RX BPF 41, 43 at the output of the LNA 44, 46. In this example, the additional RX BPFs 41, 43 (denoted in this example as part of the amplifying circuits 45, 47 but could be considered as separate components) preferably configured with an identical or similar frequency response are ceramic multilayer filter modules. In one embodiment, the ceramic multilayer filter modules are low Q filters having a Q of about 100 to 200. In contrast, in one embodiment, the acoustic BPFs 40, 41 are high Q filters having a Q greater than 500 to 4000. In practice, the high Q of acoustic filters is desirable and helpful. However, for some applications, the low out-of-band attenuation of acoustic filters may be undesirable. Conversely, the low Q of ceramic multilayer filter modules may be undesirable, but the high out-of-band attenuation achievable by cascading one or more ceramic multilayer filters is desirable and helpful. As is explained in more detail below, the combination of the acoustic BPFs 40, 42 with the ceramic multilayer BPFs 41, 43 produces a frequency response that advantageously provides both high Q and high out-of-band attenuation.

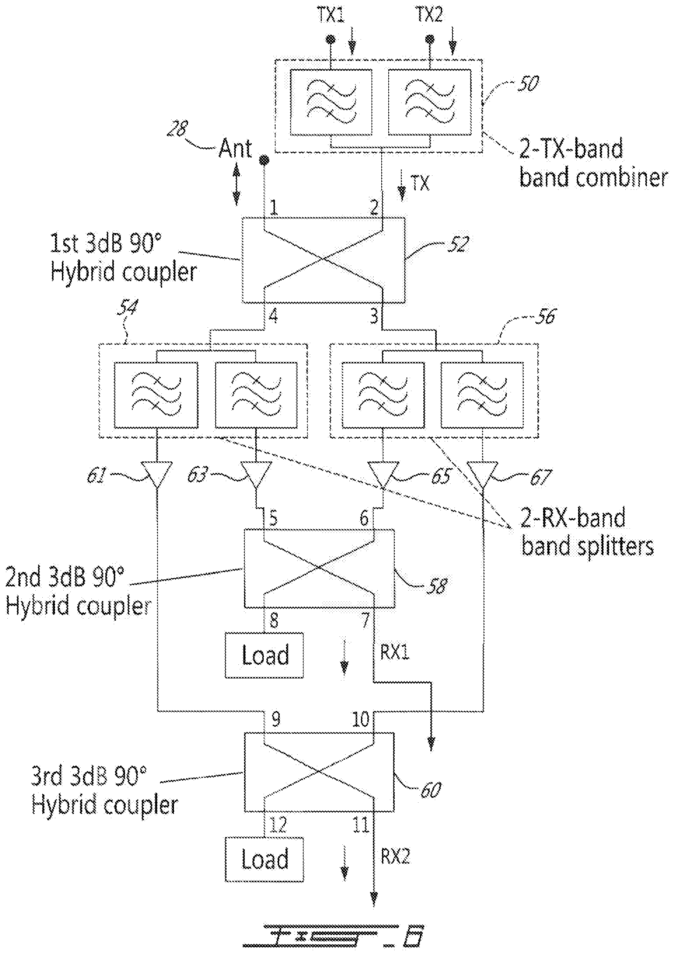

Referring now to Figure 6, there is shown a four band multiplexer constructed in accordance with principles of the present disclosure that provides enhanced PIM performance in combination with balanced amplification of the received signals. As shown, , two independent transmit signals, TX1 and TX2, are combined by a dual band, band combiner 50. The combined output of the dual band combiner 50 is input to port 2 of a first 3dB 90 degree hybrid coupler 52. These signals are reflected at ports 3 and 4 and added in phase at the port 1 and coupled to the antenna 28.

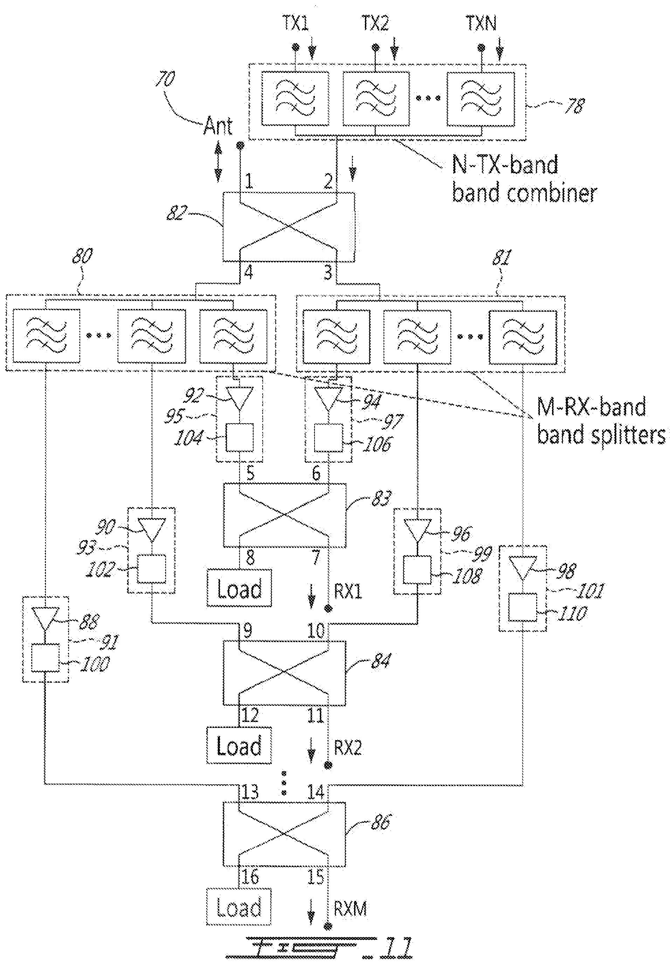

Two receive signals in different bands, RX1 and RX2, are received by the antenna 28 and input to port 1 of the first hybrid coupler 52. These signals are split to port 3 (direct port) and to port 4 (coupled port). The RX1 signal at port 4 is coupled to port 5 of a second hybrid coupler 58 via a two-band, band splitter 54 and an amplifying circuit 63 (e.g. LNA). The RX2 signal at port 4 is coupled to port 9 of a third hybrid coupler 60 via the splitter 54 and another amplifying circuit 61.Similarly, the RX1 signal at port 3 is coupled to port 6 of the second hybrid coupler 58 via a two-band, band splitter 56 and an amplifying circuit 65. The RX2 signal at port 3 is coupled to port 10 of the third hybrid coupler 60 via the splitter 56 and another amplifying circuit 67. The signal RX1 received at ports 5 and 6 are coupled to output port 7 of the second hybrid coupler 58. Likewise, the signal RX2 received at ports 9 and 10 are coupled to output port 11 of the third hybrid coupler 60. In the example of Figure 6, the amplifying circuits 61, 63, 65, 67 each include a Low Noise Amplifier (LNA) with preferably an identical or similar frequency response. However, other amplifying circuit configurations are possible (as will be described below in further detail) such as for example, the use of one or more BPF filters (not shown) to enhance the RX out-of-band attenuation and/or lower the RX NF. This variant is discussed in further detail below in relation to Figures 11-14.

In addition, the band splitters 54, 56 preferably configured with an identical or similar frequency response operate to pass and split the frequency bands corresponding to the receive signals RX1 and RX2 but in addition, to reject the TX1 and TX2 signals coupled via ports 3, 4 of the first hybrid coupler 52. However, other filters could be used such as, for example, the BPFs described previously in connection with Figures 4 and 5. In some embodiments, the splitters 54, 56 may be acoustic filters (e.g. SAW, BAW or FBAR filters) to help reduce the size and cost associated with the multiplexer design. However, other types of filters and/or other filtering implementations are possible.

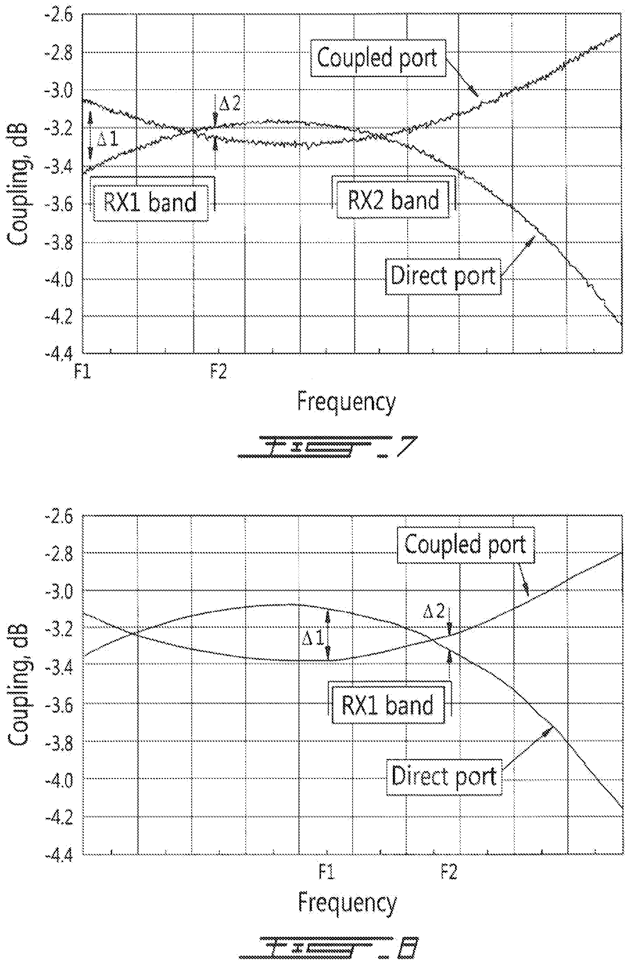

Figure 7 is a graph of the frequency response of the first hybrid coupler 52 and Figure 8 is a graph of the frequency response of the second hybrid coupler 58. Figure 7 shows that for an input signal at port 2 of the first hybrid coupler 52, the coupled port 3 has about 0.35 dB higher power at the lower band edge F1 than the signal at direct port 4. At the higher band edge F2, the power at the coupled port 3 is about 0.08 dB lower than the power at the direct port 4. In order to offset these power differences, the frequency response of the second hybrid coupler 58 is the complement of the frequency response of the first hybrid coupler 52. Thus, as shown in Figure 8, the coupled port power is about 0.35 dB lower than the direct port power at the lower frequency F1, and the coupled port power is about 0.08 dB higher than the direct port power at the higher frequency F2. Therefore, when a signal traverses both the first and second hybrid couplers 52, 58, the difference in power between the direct and coupled paths in the first hybrid coupler 52 are offset by the difference between the direct and coupled paths in the second hybrid coupler 58. Thus, the frequency responses of the first and second hybrid couplers are said to be complementary.

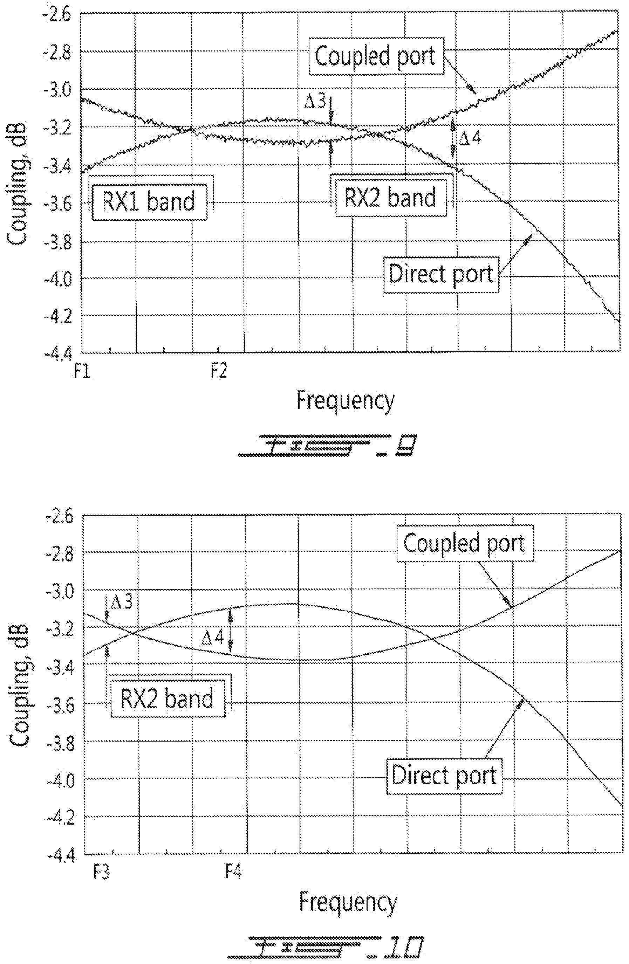

Figure 9 is a graph of the frequency response of the first hybrid coupler 52, showing the second receive band, RX2, and Figure 10 is a graph of the frequency response of the third hybrid coupler 60. These figures show that the frequency responses of the first and third hybrid couplers 52, 60 are complementary with respect to the second receive band RX2 between frequencies F3 and F4. For example, the difference between the coupling of the direct port path and the coupling of the coupled port path at frequency F3 of the first hybrid coupler 52 is offset by the difference between the coupling of the direct port path and the coupling of the coupled port path of the third hybrid coupler 60. The same is true for the coupling of the two hybrid couplers 52, 60 at frequency F4.

Thus, the two TX signals arriving from different paths to port 7 of the second hybrid coupler 58 will have almost the same power level across the entire RX1 band. Therefore, the two parts of the signals in the RX1 band will get better cancellation at the port 7 than when the frequency responses of the two hybrid couplers 52, 58 are not complementary, which means that any PIM generated by the TX1 and TX2 filters of the combiner 50 resulting from passing the TX1 and TX2 signals in the RX1 band will be substantially cancelled at port 7, the RX1 output port. The same holds true for the RX2 band at port 11 of the third hybrid coupler 60. Further, since the antenna receiving signals arriving at load ports 8 and 12 will be well-cancelled due to the complementary frequency responses of the first and second hybrid couplers, and the first and third hybrid couplers, as a result of the improved cancellation, the insertion loss between the antenna port 1 and the RX ports 7 and 11 will be lower than would be if the frequency responses of the two hybrid couplers were not complementary.

Figure 11 is a circuit block diagram of an example of a multiband multiplexer that further illustrates the concepts described above with respect to Figures 4 to 10, extended to more than four bands. In particular, Figure 11 shows a multiplexer for N transmit bands corresponding to N transmit signals TX1,... TXN and M receive bands corresponding to M receive signals RX1,... RXM. In this example, N and M are positive integers that can be one or more. The N transmit bands of the N transmit signals TX1,...TXN are combined by an N-band, band combiner 78. The combined output of the N-band combiner 78 is input to port 2 of a first hybrid coupler (e.g. a 3dB 90 degree coupler) 82. These signals are reflected at ports 3 and 4, added in phase at port 1 and coupled to the antenna 70.

The multiplexer shown in Figure 11 includes a first and second M-band, band splitter 80, 81 each configured to split the M receive signals, RX1,...RXM received at the antenna 70. Similarly to the examples described in relation to Figures 4 to 10 above, the multiband multiplexer example of Figure 11 also includes an amplifying circuit in each receive path to provide balanced amplification of the M received signals RX1,... RXM received at the antenna 70. Specifically, the M receive signals RX1, ...RXM received by the antenna 70 and input to port 1 of the first hybrid coupler 82 are split to port 3 (direct port) and to port 4 (coupled port). A first set of M amplifying circuits 91, 93, 95 each connects one of the M outputs of the M-band splitter 80 to an input port of hybrid couplers 83, 84, 86 while a second set of amplifying circuits 97, 99, 101 each connects one of the M outputs of the M-band splitter 81 to an input port of hybrid couplers 83, 84, 86 to provide balanced amplification of the received signals RX1,... RXM received at the antenna 70.

In particular, the RX1 signal at port 4 is coupled to port 5 of a second hybrid coupler 83 via the first M-band splitter 80 and amplifying circuit 95 of the first set of amplifying circuits 91, 93, 95. The RX2 signal at port 4 is coupled to port 9 of a third hybrid coupler 84 via the splitter 80 and another amplifying circuit 93 of the first set of amplifying circuits 91, 93, 95. Similarly, the RX1 signal at port 3 is coupled to port 6 of the second hybrid coupler 83 via the second M-band splitter 81 and an amplifying circuit 97 of the second set of amplifying circuits 97, 99, 101. The RX2 signal at port 3 is coupled to port 10 of the third hybrid coupler 84 via the splitter 81 and another amplifying circuit 99 of the second set of amplifying circuits 97, 99, 101. The RXM signal at ports 3 and 4 follow similar paths through the splitters 80 and 81 and amplifying circuits 91, 101 to eventually be coupled to ports 13 and 14 of an Mth hybrid coupler 86.

The signal RX1 received at ports 5 and 6 are coupled to output port 7 of the second hybrid coupler 83. Likewise, the signal RX2 received at ports 9 and 10 are coupled to output port 11 of the third hybrid coupler 84 while the signal RXM received at ports 13 and 14 are coupled to output port 15 of the Mth hybrid coupler 86.

In this example, the first and second set of amplifying circuits 91, 93, 95 and 97, 99, 101 are preferably configured with an identical or similar frequency response and each includes an LNA 88, 90, 92, 94, 96, 98 which optionally is connected in series with another BPF 100, 102, 104, 106, 108, 110 (e.g. a ceramic multilayer filter module) to further improve the RX NF and/or RX out-of-band attenuation. The BPFs 100, 102, 104, 106, 108, 110 are denoted in this example as part of the amplifying circuits 91, 93, 95 and 97, 99, 101 but do not have to be and could instead be considered as separate (stand-alone) components of each receive path and cascaded with the amplifying circuits 91, 93, 95 and 97, 99, 101. Also, as noted above, many possibilities exist for the type and/or number of filters used in each receive path. Generally, the appropriate filtering combination in each receive path may depend in part on the RX NF and/or RX out-of-band attenuation requirement, number, location of the transmit/receive bands and/or size of the RF front end.

In addition, the M-band splitters 80, 81 preferably configured with an identical or similar frequency response, operate to pass and split the frequency bands corresponding to the receive signals RX1, ... RXM received at port 4 of the first hybrid coupler 82 into M bands, each corresponding to a particular receive signal RX1,...RXM. In addition, the M-band splitters 80, 81 may be configured to reject the transmit signals TX1, ...TXM coupled via ports 3, 4 of the first hybrid coupler 82. However, other filters could be used such as, for example, the BPFs described previously in connection with Figures 4 and 5. In some embodiments, the splitters 80, 81 may be acoustic filters (e.g. SAW, BAW or FBAR filters) to help reduce the size and cost associated with the multiplexer design. However, other types of filters and/or other filtering implementations are possible.

In the circuit diagram of Figure 11, the hybrid coupler 82 has a complementary frequency response with respect to hybrid couplers 83, 84 and 86. More particularly, the frequency response of the Mth hybrid coupler for the Mth receive band (for receive signal RXM), is the complement of the frequency response of the hybrid coupler 82 for the Mth receive band (for receive signal RXM).

In addition to providing balanced amplification, the multiplexer arrangement of Figure 11 also exhibits relatively low PIM. Compared to single-ended amplifier configurations, other benefits associated with the balanced amplification configuration such as shown in Figure 11 are better power handling, better input/output matching capability with a lower RL and better stability. Compared to conventional front end designs that use a conventional multiplexer in series with a balanced LNA (ie in a receive circuit connected to receive one of the RX1,...RXM signals), the multiplexer configuration of the present disclosure also advantageously uses a reduced number of components (e.g. a reduced number of couplers) resulting in a design with a lower NF, that is less expensive and smaller, which, for some applications (e.g. low-power basestations) can be a substantial benefit.

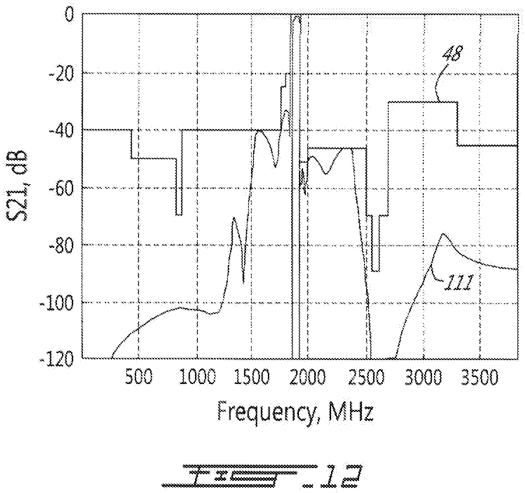

Figure 12 shows how the composite frequency response 111 of a combination of acoustic and ceramic filters (such as BPFs 40, 41 and BPFs 42, 43 of Figure 5 for single receive band applications and the BPFs in splitters 80, 81 and BPFs 100, 102, 104, 106, 108 and 110 of Figure 11 for multi receive band applications) meets an example high Q and out-of-band attenuation mask requirement 48 such as for a Long Term Evolution (LTE) band 2, for some other 3GPP band or for bands of other (future) wireless communications networks. Note also that, because the filtering loss between the antenna and the LNAs makes a large contribution to the RX NF and since the acoustic filters have lower insertion loss than the conventional resonator type ceramic filters, the NF of the receive path in the filter combination shown in Figures 5 and 11 will be lower than such resonator type ceramic filter-based existing RX front-end filter solutions if the BPFs 40 and 42 in Figure 5 and the BPFs in splitters 80 and 81 in Figure 11 were the acoustic filters.

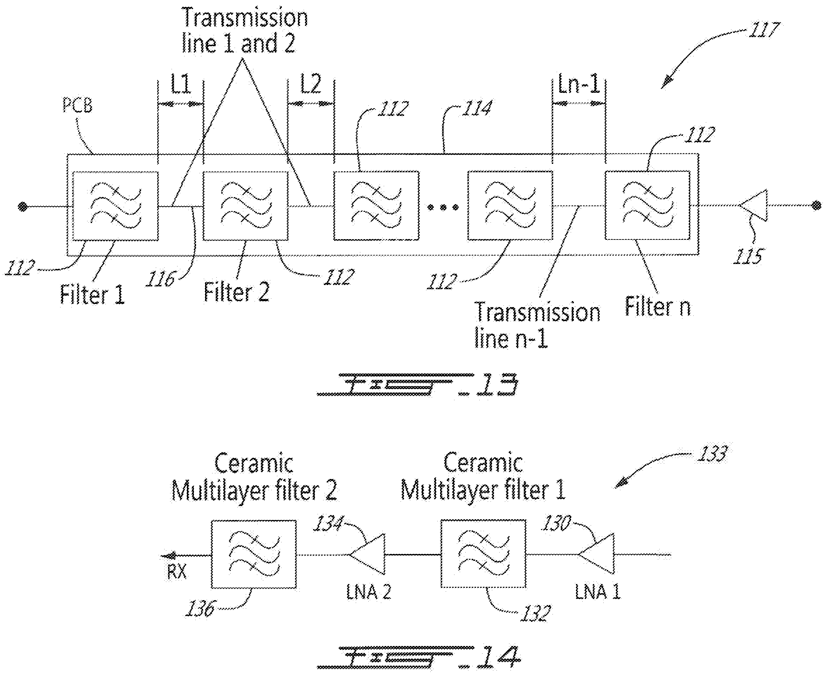

Figure 13, 14 show alternative embodiments for the amplifying circuits according to the principles of the present disclosure. In Figure 13, the amplifying circuit 117 includes an LNA 115 connected in series with a ceramic multilayer filter module 117 that includes cascaded ceramic multilayer filters 112 labeled Filter 1, Filter 2... Filter n, and formed on a printed circuit board 114. The ceramic multilayer filters 112 are separated by transmission lines 116. In one embodiment, low temperature co-fired ceramic (LTCC) multilayer filters usually have dimensions not larger than 4.5x3.2x1.9 millimeters. Some LTCC multilayer filters have dimensions as small as 1.6x0.8x0.6 millimeters. This is much smaller than the conventional resonator type ceramic filters that have dimensions on the order of 50x15x10 millimeters or larger.

Note that since LTCC multilayer filters do not have a completely metal-sealed package outside the filter block, their filter performance may be affected by cross coupling with other nearby RF components, including other nearby LTCC filters. Therefore, in order to obtain good cascade filtering performance, three preferred cascading conditions may need to be satisfied. First, all LTCC multilayer filters should be of the same design. Second, ports of any two single LTCC multilayer filters connected by a transmission line should have the same individual port impedance.

Third, the lengths L1, L2... Ln-1 (collectively referred to as length "L") of the transmission lines connecting two single LTCC multilayer filters can be optimized using a 3-dimensional electromagnetic (EM) simulation tool that accounts for the EM properties of the printed circuit board (PCB). Using the EM simulation tool, undesired spurious modes can be reduced or eliminated from the total cascading filter performance. These unwanted modes are generated from cross-coupling if length L is too short or from phase-mismatch due to an inappropriate length, L. Using common PCB materials, such as FR-4 and Rogers, etc., in one embodiment, the optimized distance L may be within the range of 1mm to 7mm. In one embodiment the lengths L1, L2, etc. are the same. The PCB to be used for the cascaded LTCC multilayer filter module can be separate from or part of the common RX front end section PCB that carries the low noise amplifier and other RF front end components.

Figure 14 is a block diagram of another embodiment for the amplifying circuit having a first LNA 130, a first ceramic multilayer filter 132, a second LNA 134 and a second ceramic multilayer filter 136. This embodiment differs from other embodiments described herein because in this embodiment, an LNA 134 is interposed between the two ceramic multilayer filters 132 and 136 to reduce the amount of cross coupling between the two ceramic multilayer filters 132, 136. Also, since the ceramic multilayer filter 136 is after the second LNA 134, the loss of the ceramic multilayer filter 136 should make only a small contribution to the RX NF. Further embodiments may include a cascade of additional ceramic multilayer filters and LNAs. The more ceramic multilayer filters that are cascaded, the greater will be the out-of-band attenuation achieved. Of note, although the embodiments of Figure 5 and 11 only show the use of a single additional BPF (e.g. ceramic multilayer filter) in the amplifying circuit, it is understood that other filtering arrangements such as so shown in Figures 13 and 14 can be used.

Thus, the embodiments described herein include RF multiplexers that provide effective separation of transmit signals from receive signals and balanced amplification of the receive signals. As disclosed here, various filter configurations can be used in accordance with the principles of the present disclosure to provide small, lower cost radio base stations with miniature filters.

The present disclosure advantageously provides a multiplexing method and system for routing transmit and receive signals in a radio RF front end to separate and amplify received signals from transmit signals in different frequency bands. In some examples, the multiplexing method and system of the present disclosure provides enhanced PIM performance in combination with balanced amplification of the received signals.

According to one aspect, the present disclosure provides a Radio Frequency (RF) multiplexer for routing transmit signals to an antenna and routing receive signals to a receiver. The multiplexer includes a first hybrid coupler providing four ports where a first port configured to connect to an antenna and a second port being an input port is configured to receive an N-band transmit signal. The multiplexer further includes a first M-band splitter connected to a third port of the first hybrid coupler and produces a first set of M outputs. The multiplexer further includes a first set of M amplifying circuits, each having an input port connected to one of the first set of M outputs and configured to produce an amplified output via an output port. The multiplexer further includes a second M-band splitter connected to a fourth port of the first hybrid coupler and produces a second set of M outputs. The multiplexer further includes a second set of M amplifying circuits, each having an input port connected to one of the second set of M outputs and configured to produce an amplified output via an output port. The multiplexer further includes at least one other hybrid coupler providing four ports, a first port being connected to receive the amplified output of one of the first set of amplifying circuits, and a second port being connected to the amplified output of one of the second set of amplifying circuits, each of the at least one other hybrid coupler having a third port being an output port and configured to output one of M receive signals for one of M receive circuits and a fourth port configured to connect to one of M loads.

According to this aspect, in some embodiments, each of the first and the plurality of hybrid couplers is a 3dB 90 degree hybrid coupler. In some embodiments, M and N are each a positive integer equal to or greater than one and the at least one other hybrid coupler is a set of M hybrid couplers. In some other embodiments, each of the at least one other hybrid coupler has a frequency response that complements a frequency response of the first hybrid coupler in a respective band so that a combined frequency response of the first hybrid coupler and one of the at least one other hybrid coupler causes cancellation of two signals arriving at an output port of the one of the at least one other hybrid coupler from two different paths through the hybrid couplers. In some other embodiments, the first and second M-band splitters each have M filters and each filter of the first M-band splitter has a frequency response that corresponds to a frequency response of a corresponding filter of the second M-band splitter.

In some other embodiments, each one of the first and second set of M amplifying circuits includes at least one amplifier, and each of the at least one amplifier of the first set of M amplifying circuits has a frequency response in a respective band that corresponds to a frequency response of a corresponding amplifier of the second set of M amplifying circuits in the respective band. In some other embodiments, each of the first and second set of M amplifying circuits includes a Low Noise Amplifier (LNA). In some other embodiments, each one of the first and second set of amplifying circuits includes at least one cascade of an amplifier followed in series by at least one ceramic multilayer filter module. Also, in some other embodiments, each filter of the first M-band splitter and each filter of the second M-band splitter includes an acoustic filter. In some other embodiments, the acoustic filter is one of a Surface Acoustic Wave (SAW) filter, a Bulk Acoustic Wave (BAW) filter and a Thin-Film Bulk Acoustic resonator (FBAR) filter. In some other embodiments, an out-of-band frequency attenuation characteristic of the at least one ceramic multilayer filter module exceeds an out-of-band frequency attenuation characteristic of each of a corresponding two of the 2M acoustic filters. In some other embodiments, a pass band amplitude characteristic of the at least one ceramic multilayer filter module varies less than a pass band amplitude characteristic of a corresponding one of the 2M acoustic filters.

In some other embodiments, the first M-band splitter comprises M band pass filters, each band pass filter of the first M-band splitter passing a different one of the M receive signals and rejecting the N-band transmit signal. In some other embodiments the second M-band splitter includes M band pass filters, each band pass filter of the second M-band splitter corresponding to a band pass filter of the first M-band splitter.

Yet in some further embodiments, the multiplexer further includes an N-band combiner having an output port connected to the second port of the first hybrid coupler, the N-band combiner configured to receive N transmit signals via N input ports and to produce via its output port the N-band transmit signal.

It will be appreciated by persons skilled in the art that the present disclosure is not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A radio frequency, RF, multiplexer for routing transmit signals to an antenna and routing receive signals to a receiver, the multiplexer comprising:
a first hybrid coupler (82) providing four ports, a first port configured to connect to an antenna (70), a second port being an input port and configured to receive an N-band transmit signal;
a first M-band splitter (80) connected to a third port of the first hybrid coupler (82), the first M-band splitter (80) having a first set of M outputs;
a first set of M amplifying circuits (91, 93, 95), each having an input port connected to one of the first set of M outputs and configured to produce an amplified output via an output port;
a second M-band splitter (81) connected to a fourth port of the first hybrid coupler (82), the second M-band splitter (81) having a second set of M outputs;
a second set of M amplifying circuits (97, 99, 101), each having an input port connected to one of the second set of M outputs and configured to produce an amplified output via an output port;
at least one other hybrid coupler (83, 84, 86) providing four ports, a first port being connected to receive the amplified output of one of the first set of amplifying circuits, and a second port being connected to the amplified output of one of the second set of amplifying circuits, each of the at least one other hybrid coupler (83, 84, 86) having a third port being an output port and configured to output one of M receive signals for one of M receive circuits and a fourth port configured to connect to one of M loads; and
wherein M is a positive integer greater than one and the at least one other hybrid coupler (83, 84, 86) is a set of M hybrid couplers.

2. The multiplexer of Claim 1, wherein each of the first (82) and the at least one other hybrid coupler (83, 84, 86) is a 3dB 90 degree hybrid coupler.

3. The multiplexer of Claim 1, wherein N is an integer equal to one or more.

4. The multiplexer of Claim 1, wherein each of the at least one other hybrid coupler (83, 84, 86) has a frequency response that complements a frequency response of the first hybrid coupler (82) in a respective band so that a combined frequency response of the first hybrid coupler (82) and one of the at least one other hybrid coupler (83, 84, 86) causes cancellation of two signals arriving at an output port of the one of the at least one other hybrid coupler (83, 84, 86) from two different paths through the hybrid couplers.

5. The multiplexer of Claim 1, wherein the first and second M-band splitters (80, 81) each have M filters and each filter of the first M-band splitter (80) has a frequency response that corresponds to a frequency response of a corresponding filter of the second M-band splitter (81).

6. The multiplexer of Claim 1, wherein each one of the first and second set of M amplifying circuits (91, 93, 95, 97, 99, 101) includes at least one amplifier (88, 90, 92, 94, 96, 98), and each of the at least one amplifier (88, 90, 92) of the first set of M amplifying circuits (91, 93, 95) has a frequency response in a respective band that corresponds to a frequency response of a corresponding amplifier (94, 96, 98) of the second set of M amplifying circuits (97, 99, 101) in the respective band.

7. The multiplexer of Claim 1, wherein each of the first and second set of M amplifying circuits (91, 93, 95, 97, 99, 101) includes a Low Noise Amplifier (LNA).

8. The multiplexer of Claim 1, wherein each one of the first and second set of amplifying circuits (91, 93, 95, 97, 99, 101) includes at least one cascade of an amplifier (88, 90, 92, 94, 96, 98) followed in series by at least one ceramic multilayer filter module (100, 102, 104, 106, 108, 110).

9. The multiplexer of Claim 5, wherein each filter of the first M-band splitter (80) and each filter of the second M-band splitter (81) includes an acoustic filter.

10. The multiplexer of Claim 9, wherein the acoustic filter is one of a Surface Acoustic Wave (SAW) filter, a Bulk Acoustic Wave (BAW) filter and a Thin-Film Bulk Acoustic resonator (FBAR) filter.

11. The multiplexer of Claim 9, wherein an out-of-band frequency attenuation characteristic of a frequency range of the at least one ceramic multilayer filter module (100, 102, 104, 106, 108, 110) exceeds an out-of-band frequency attenuation characteristic of a corresponding frequency range of each of a corresponding one of the 2M acoustic filters.

12. The multiplexer of Claim 1, wherein the first M-band splitter (80) comprises M band pass filters, each band pass filter of the first M-band splitter (80) passing a different one of the M receive signals and rejecting the N-band transmit signal.

13. The multiplexer of Claim 12, wherein the second M-band splitter (81) comprises M band pass filters, each band pass filter of the second M-band splitter (81) corresponding to a band pass filter of the first M-band splitter (80).

14. The multiplexer of Claim 1 further comprising an N-band combiner (78) having an output port connected to the second port of the first hybrid coupler (82), the N-band combiner (78) configured to receive N transmit signals via N input ports and to produce via its output port the N-band transmit signal.

## Patentansprüche

1. Hochfrequenz, HF,-Multiplexer zum Leiten von Sendesignalen zu einer Antenne und Leiten von Empfangssignalen zu einem Empfänger, wobei der Multiplexer umfasst:
einen ersten Hybridkoppler (82), der vier Anschlüsse bereitstellt, wobei ein erster Anschluss zum Verbinden einer Antenne (70) ausgelegt ist, und ein zweiter Anschluss ein Eingangsanschluss und zum Empfangen eines N-Band-Sendesignals ausgelegt ist;
einen ersten M-Band-Teiler (80), der mit einem dritten Anschluss des ersten Hybridkopplers (82) verbunden ist, wobei der erste M-Band-Teiler (80) einen ersten Satz von M Ausgängen aufweist;
einen ersten Satz von M Verstärkungsschaltungen (91, 93, 95), die jeweils einen Eingangsanschluss aufweisen, der mit einem des ersten Satzes von M Ausgängen verbunden ist, und zum Erzeugen einer verstärkten Ausgabe über einen Ausgangsanschluss ausgelegt sind;
einen zweiten M-Band-Teiler (81), der mit einem vierten Anschluss des ersten Hybridkopplers (82) verbunden ist, wobei der zweite M-Band-Teiler (81) einen zweiten Satz von M Ausgängen aufweist;
einen zweiten Satz von M Verstärkungsschaltungen (97, 99, 101), die jeweils einen Eingangsanschluss aufweisen, der mit einem des zweiten Satzes von M Ausgängen verbunden ist, und zum Erzeugen einer verstärkten Ausgabe über einen Ausgangsanschluss ausgelegt sind;
mindestens einen anderen Hybridkoppler (83, 84, 86), der vier Anschlüsse bereitstellt, wobei ein erster Anschluss zum Empfangen der verstärkten Ausgabe einer des ersten Satzes von Verstärkungsschaltungen verbunden ist, und ein zweiter Anschluss mit der verstärkten Ausgabe einer des zweiten Satzes von Verstärkungsschaltungen verbunden ist, wobei jeder des mindestens einen anderen Hybridkopplers (83, 84, 86) einen dritten Anschluss, der ein Ausgangsanschluss und zum Ausgeben eines von M Empfangssignalen für eine von M Empfangsschaltungen ausgelegt ist, und einen vierten Anschluss aufweist, der zum Verbinden einer von M Lasten ausgelegt ist; und
wobei M eine positive ganze Zahl größer als eins ist, und es sich bei dem mindestens einen anderen Hybridkoppler (83, 84, 86) um einen Satz von M Hybridkopplern handelt.

2. Multiplexer nach Anspruch 1, wobei jeder des ersten (82) und des mindestens einen anderen Hybridkopplers (83, 84, 86) ein 3-dB-90-Grad-Hybridkoppler ist.

3. Multiplexer nach Anspruch 1, wobei N eine ganze Zahl gleich eins oder höher ist.

4. Multiplexer nach Anspruch 1, wobei der mindestens eine andere Hybridkoppler (83, 84, 86) eine Frequenzantwort aufweist, die eine Frequenzantwort des ersten Hybridkopplers (82) in einem jeweiligen Band ergänzt, so dass eine kombinierte Frequenzantwort des ersten Hybridkopplers (82) und des mindestens einen anderen Hybridkopplers (83, 84, 86) Aufhebung von zwei Signalen bewirkt, die von zwei verschiedenen Pfaden durch die Hybridkoppler an einem Ausgangsanschluss des einen des mindestens einen anderen Hybridkopplers (83, 84, 86) ankommen.

5. Multiplexer nach Anspruch 1, wobei der erste und der zweite M-Band-Teiler (80, 81) jeweils M Filter aufweisen, und jedes Filter des ersten M-Band-Teilers (80) eine Frequenzantwort aufweist, die einer Frequenzantwort eines entsprechenden Filters des zweiten M-Band-Teilers (81) entspricht.

6. Multiplexer nach Anspruch 1, wobei jede des ersten und des zweiten Satzes von M Verstärkungsschaltungen (91, 93, 95, 97, 99, 101) mindestens einen Verstärker (88, 90, 92, 94, 96, 98) umfasst, und jeder des mindestens einen Verstärkers (88, 90, 92) des ersten Satzes von M Verstärkungsschaltungen (91, 93, 95) eine Frequenzantwort in einem jeweiligen Band aufweist, die einer Frequenzantwort eines entsprechenden Verstärkers (94, 96, 98) des zweiten Satzes von M Verstärkungsschaltungen (97, 99, 101) im jeweiligen Band entspricht.

7. Multiplexer nach Anspruch 1, wobei jede des ersten und des zweiten Satzes von M Verstärkungsschaltungen (91, 93, 95, 97, 99, 101) einen rauscharmen Verstärker (LNA) umfasst.

8. Multiplexer nach Anspruch 1, wobei jede des ersten und des zweiten Satzes von Verstärkungsschaltungen (91, 93, 95, 97, 99, 101) mindestens eine Kaskade eines Verstärkers (88, 90, 92, 94, 96, 98) gefolgt von mindestens einem keramischen Mehrschichtfiltermodul (100, 102, 104, 106, 108, 110) in Reihe umfasst.

9. Multiplexer nach Anspruch 5, wobei jedes Filter des ersten M-Band-Teilers (80) und jedes Filter des zweiten M-Band-Teilers (81) ein akustisches Filter umfassen.

10. Multiplexer nach Anspruch 9, wobei das akustische Filter eines von einem akustischen Oberflächenwellen (SAW)-Filter, einem akustischen Volumenwellen (BAW)-Filter und einem Filter mit akustischem Dünnfilm-Volumenwellenresonator (FBAR) ist.

11. Multiplexer nach Anspruch 9, wobei eine frequenzabhängige Außerband-Dämpfungscharakteristik eines Frequenzbereichs des mindestens einen keramischen Mehrschichtfiltermoduls (100, 102, 104, 106, 108, 110) eine frequenzabhängige Außerband-Dämpfungscharakteristik eines entsprechenden Frequenzbereichs jedes eines entsprechenden der 2 M akustischen Filter überschreitet.

12. Multiplexer nach Anspruch 1, wobei der erste M-Band-Teiler (80) M Bandpassfilter umfasst, wobei jedes Bandpassfilter des ersten M-Band-Teilers (80) ein verschiedenes der M Empfangssignale durchlässt und die N-Band-Sendesignale zurückweist.

13. Multiplexer nach Anspruch 12, wobei der zweite M-Band-Teiler (81) M Bandpassfilter umfasst, wobei jedes Bandpassfilter des zweiten M-Band-Teilers (81) einem Bandpassfilter des ersten M-Band-Teilers (80) entspricht.

14. Multiplexer nach Anspruch 1, ferner umfassend einen N-Band-Kombinierer (78) mit einem Ausgangsanschluss, der mit dem zweiten Anschluss des ersten Hybridkopplers (82) verbunden ist, wobei der N-Band-Kombinierer (78) zum Empfangen von N Sendesignalen über N Eingangsanschlüsse und Erzeugen des N-Band-Sendesignals über seinen Ausgangsanschluss ausgelegt ist.

## Revendications

1. Multiplexeur de radiofréquences, RF, pour acheminer des signaux de transmission jusqu'à une antenne et pour acheminer des signaux de réception jusqu'à un récepteur, le multiplexeur comprenant :
un premier coupleur hybride (82) fournissant quatre ports, un premier port configuré pour se raccorder à une antenne (70), un deuxième port étant un port d'entrée et configuré pour recevoir un signal de transmission à N bandes ;
un premier diviseur à M bandes (80) raccordé à un troisième port du premier coupleur hybride (82), le premier diviseur à M bandes (80) comportant un premier ensemble de M sorties ;
un premier ensemble de M circuits d'amplification (91, 93, 95), chacun d'eux comportant un port d'entrée raccordé à l'une du premier ensemble de M sorties et configuré pour produire une sortie amplifiée par l'intermédiaire d'un port de sortie ;
un deuxième diviseur à M bandes (81) raccordé à un quatrième port du premier coupleur hybride (82), le deuxième diviseur à M bandes (81) comportant un deuxième ensemble de M sorties ;
un deuxième ensemble de M circuits d'amplification (97, 99, 101), chacun d'eux comportant un port d'entrée raccordé à l'un du deuxième ensemble de M sorties et configuré pour produire une sortie amplifiée par l'intermédiaire d'un port de sortie ;
au moins un autre coupleur hybride (83, 84, 86) fournissant quatre ports, un premier port étant raccordé pour recevoir la sortie amplifiée de l'un du premier ensemble de circuits d'amplification, et un deuxième port étant raccordé à la sortie amplifiée de l'un du deuxième ensemble de circuits d'amplification, chacun de l'au moins un autre coupleur hybride (83, 84, 86) comportant un troisième port qui est un port de sortie et configuré pour délivrer l'un de M signaux de réception pour l'un de M circuits de réception et un quatrième port configuré pour se raccorder à l'une de M charges ; et
dans lequel M est un nombre entier positif supérieur à un et l'au moins un autre coupleur hybride (83, 84, 86) est un ensemble de M coupleurs hybrides.

2. Multiplexeur selon la revendication 1, dans lequel chacun du premier coupleur hybride (82) et de l'au moins un autre coupleur hybride (83, 84, 86) est un coupleur hybride à 90 degrés de 3 dB.

3. Multiplexeur selon la revendication 1, dans lequel N est un nombre entier supérieur ou égal à un.

4. Multiplexeur selon la revendication 1, dans lequel chacun de l'au moins un autre coupleur hybride (83, 84, 86) présente une réponse de fréquence complémentaire d'une réponse de fréquence du premier coupleur hybride (82) dans une bande respective de sorte qu'une réponse de fréquence combinée du premier coupleur hybride (82) et de l'un de l'au moins un autre coupleur hybride (83, 84, 86) provoque une annulation de deux signaux arrivant à un port de sortie de l'un de l'au moins un autre coupleur hybride (83, 84, 86) par deux voies différentes par l'intermédiaire des coupleurs hybrides.

5. Multiplexeur selon la revendication 1, dans lequel chacun des premier et deuxième diviseurs à M bandes (80, 81) comporte M filtre et chaque filtre du premier diviseur à M bandes (80) présente une réponse de fréquence correspondant à une réponse de fréquence d'un filtre correspondant du deuxième diviseur à M bandes (81).

6. Multiplexeur selon la revendication 1, dans lequel chacun des premier et deuxième ensembles de M circuits d'amplification (91, 93, 95, 97, 99, 101) comprend au moins un amplificateur (88, 90, 92, 94, 96, 98), et chacun de l'au moins un amplificateur (88, 90, 92) du premier ensemble de M circuits d'amplification (91, 93, 95) présente une réponse de fréquence dans une bande respective correspondant à une réponse de fréquence d'un amplificateur correspondant (94, 96, 98) du deuxième ensemble de M circuits d'amplification (97, 99, 101) dans la bande respective.

7. Multiplexeur selon la revendication 1, dans lequel chacun des premier et deuxième ensembles de M circuits d'amplification (91, 93, 95, 97, 99, 101) comprend un amplificateur à faible bruit (LNA).

8. Multiplexeur selon la revendication 1, dans lequel chacun des premier et deuxième ensembles de M circuits d'amplification (91, 93, 95, 97, 99, 101) comprend au moins une cascade d'un amplificateur (88, 90, 92, 94, 96, 98) suivi en série par au moins un module de filtre multicouche en céramique (100, 102, 104, 106, 108, 110).

9. Multiplexeur selon la revendication 5, dans lequel chaque filtre du premier diviseur à M bandes (80) et chaque filtre du deuxième diviseur à M bandes (81) comprennent un filtre acoustique.

10. Multiplexeur selon la revendication 9, dans lequel le filtre acoustique est l'un d'un filtre d'onde acoustique de surface (SAW), d'un filtre d'onde acoustique de volume (BAW) et d'un filtre de résonateur acoustique de volume à film mince (FBAR).

11. Multiplexeur selon la revendication 9, dans lequel une caractéristique d'atténuation de fréquence hors bande d'une plage de fréquences de l'au moins un module de filtre multicouche en céramique (100, 102, 104, 106, 108, 110) dépasse une caractéristique d'atténuation de fréquence hors bande d'une plage de fréquences correspondante de chacun de l'un correspondant de 2M filtres acoustiques.

12. Multiplexeur selon la revendication 1, dans lequel le premier diviseur à M bandes (80) comprend M filtres passe-bande, chaque filtre passe-bande du premier diviseur à M bandes (80) laissant passer l'un différent des M signaux de réception et rejetant le signal de transmission à N bandes.

13. Multiplexeur selon la revendication 12, dans lequel le deuxième diviseur à M bandes (81) comprend M filtres passe-bande, chaque filtre passe-bande du deuxième diviseur à M bandes (81) correspondant à un filtre passe-bande du premier diviseur à M bandes (80).

14. Multiplexeur selon la revendication 1, comprenant en outre un combinateur à N bandes (78) comportant un port de sortie raccordé au deuxième port du premier coupleur hybride (82), le combinateur à N bandes (78) étant configuré pour recevoir N signaux de transmission par l'intermédiaire de N ports d'entrée et pour produire, par l'intermédiaire de son port de sortie, le signal de transmission à N bandes.
